(19)

Europäisches
Patentamt
European
Patent Office
Office européen
des brevets

(11) **EP 4 215 938 A1**

(12) **EUROPEAN PATENT APPLICATION**

(43) Date of publication:
**26.07.2023   Bulletin 2023/30**

(51) International Patent Classification (IPC):
**G01S 7/521** (2006.01)       **G01S 15/96** (2006.01)
**G10K 11/02** (2006.01)

(21) Application number: **22153209.6**

(22) Date of filing: **25.01.2022**

(52) Cooperative Patent Classification (CPC):
**G01S 7/521; B06B 1/0269; G01S 15/96;
G10K 11/02;** B06B 2201/74; G10K 2200/11

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FURUNO ELECTRIC CO., LTD.
Nishinomiya-City, Hyogo 662-8580 (JP)**

(72) Inventor: **KONDO, Futoshi
Nishinomiya-city, 662-8580 (JP)**

(74) Representative: **CSY London
Helios Court
1 Bishop Square
Hatfield
Hertfordshire AL10 9NE (GB)**

(54)   **AMPLIFIER CIRCUIT AND SONAR**

(57)      An amplifier circuit (100) to be used in a sonar (10) is described. The amplifier circuit (100) includes a transducer (101) and a matching circuit (102). The transducer (101) has an impedance characteristic having a resonance frequency and an anti-resonance frequency higher than the resonance frequency. The matching circuit (102) is connected to the transducer (101). The impedance characteristic of the transducer (101) connected to the matching circuit (102) has a first resonance frequency and a second resonance frequency higher than the first resonance frequency.

FIG. 6

EP 4 215 938 A1

**Description**

The present disclosure relates to an amplifier circuit for amplifying a voltage applied to a transducer and a sonar having the amplifier circuit.

A SONAR (sound navigation and ranging) is a technique that utilizes sound propagation to navigate, measure distances, and communicate with or detect objects on or under the surface of the water, such as other vessels. The sonar contains a transmitter for transmitting ultrasonic waves underwater. Further, the transmitter drives a transducer based on a transmission signal to transmit the ultrasonic waves underwater. Since an impedance of the transducer is high, it is necessary to apply the transmission signal with a high voltage to the transducer at the time of transmission. Conventionally, a transformer has been used as a means for amplifying voltage. However, since a transformer is large in size, the sonar device becomes large.

Currently, a method has been implemented for amplifying a voltage without using a transformer, instead, uses a matching circuit. In this method, the impedance at a resonance frequency can be lowered by matching the resonance frequency of the transducer connected to the matching circuit with the resonance frequency of the transducer itself. Thus, the voltage can be effectively amplified in a vicinity of the resonance frequency, and a high voltage can be applied to the transducer. JP2008-060879 discloses a drive circuit having the above-described configuration.

However, in the above configuration, since there is only one resonance frequency of the impedance, a band in which the transmission power of the transducer is stable is limited to a narrow band near the resonance frequency. On the other hand, the sonar should be able to transmit ultrasonic waves in as wide the band as possible. For example, when there is another ship in the vicinity of the own ship, it is preferable that the ultrasonic wave can be transmitted at a frequency different from a transmission frequency of the sonar installed in the other ship, in order to avoid interference. When the sonar transmits a wave based on a chirp signal, it is necessary to shift the transmission frequency of the ultrasonic wave by a shift amount.

However, in the above configuration, since the band in which the transmission power of the transducer is stable, is narrow, it is difficult to respond to these requests. Therefore, there is a need for an improved apparatus and method for the amplifier circuit to be used in the sonar.

An objective of the present disclosure is to provide an amplifier circuit capable of effectively expanding a band in which transmission power of a transducer is stable, and a sonar provided with the amplifier circuit.

In accordance with an example embodiment, a first aspect of the present disclosure relates to the amplifier circuit to be used in the sonar. The amplifier circuit of the present aspect includes a transducer and a matching circuit. The transducer has an impedance characteristic having a resonance frequency and an anti-resonance frequency higher than the resonance frequency. The matching circuit is connected to the transducer. Further, the impedance characteristic of the transducer connected to the matching circuit includes a first resonance frequency and a second resonance frequency higher than the first resonance frequency.

Further, since the impedance characteristic of the transducer connected to the matching circuit includes the first resonance frequency and the second resonance frequency, the transmission power of the transducer can be stabilized in the vicinity of the band over these resonance frequencies. Thus, the band in which the transmission power of the transducer can be stabilized, can be effectively expanded.

In the amplifier circuit, according to the present aspect, the second resonance frequency of the transducer connected to the matching circuit may be adjusted higher than the anti-resonance frequency of the transducer. Further, since the second resonance frequency is higher than the anti-resonance frequency of the transducer, the band, in which the transmission power of the transducer is stabilized, is expanded to a high frequency side. In the amplifier circuit, according to the present aspect, the first resonance frequency of the transducer connected to the matching circuit may be adjusted lower than the resonance frequency of the transducer. Further, since the first resonance frequency is lower than the resonance frequency of the transducer, the band, in which the transmission power of the transducer is stabilized, is expanded to a low frequency side.

In the amplifier circuit, according to the present aspect, the resonance frequency and the anti-resonance frequency of the transducer may be adjusted to be between the first resonance frequency and the second resonance frequency of the transducer connected to the matching circuit. Further, since the first resonance frequency and the second resonance frequency are outside the resonance frequency and the anti-resonance frequency of the transducer, respectively, the band in which the transmission power of the transducer is stabilized can be expanded to both the low frequency side and the high frequency side.

In the amplifier circuit, according to the present aspect, the impedance characteristic of the transducer connected to the matching circuit, may further include a first anti-resonance frequency between the first resonance frequency and the second resonance frequency. The first anti-resonance frequency of the transducer connected to the matching circuit may be adjusted lower than the anti-resonance frequency of the transducer. Further, an impedance of the transducer connected to the matching circuit at the first anti-resonance frequency may be adjusted lower than the impedance characteristic of the transducer in a range between the first and second resonance frequencies.

Generally, the impedance at the first resonance frequency and the second resonance frequency is lower than the impedance at the first anti-resonance frequency. Therefore, as described above, by adjusting the impedance at the first anti-resonance frequency lower than the impedance of the transducer, the impedance of the transducer connected to the matching circuit is made lower than the impedance of the transducer itself in the vicinity of the band straddling the first resonance frequency and the second resonance frequency, and the transmission power of the transducer can be enhanced.

In the amplifier circuit, according to the present aspect, the impedance characteristic of the transducer may have one resonance frequency and one anti-resonance frequency. The impedance characteristic of the transducer connected to the matching circuit may have two resonance frequencies. Further, the impedance of the transducer connected to the matching circuit is lowered from the impedance of the transducer itself in the vicinity of the band across the two resonance frequencies, and the transmission power of the transducer can be enhanced.

In the amplifier circuit, according to the present aspect, the transducer may be fixed to a matching layer, and the impedance characteristic of the transducer fixed to the matching layer may have a plurality of anti-resonance frequencies. In this configuration, the second resonance frequency of the transducer fixed to the matching layer and connected to the matching circuit may be adjusted higher than an average of the plurality of anti-resonance frequencies of the transducer fixed to the matching layer. The impedance of the transducer fixed to the matching layer and connected to the matching circuit can be stabilized in the vicinity of the band across the first resonance frequency and the second resonance frequency, and the transmission power of the transducer is stabilized in the vicinity of this band. Thus, the band for stabilizing the transmission power of the transducer is effectively expanded.

In the amplifier circuit, according to the present aspect, the matching circuit may include a capacitive component and an inductor. The capacitive component may be connected in parallel with the transducer, and the inductor may be connected in series with the parallel connection. Further, the impedance characteristic of the transducer connected to the matching circuit may further be adjusted to have the first anti-resonance frequency between the first resonance frequency and the second resonance frequency. The first anti-resonance frequency may be defined based at least in part on a capacitance of the capacitive component.

In the amplifier circuit, according to the present aspect, the first resonance frequency and the second resonance frequency of the transducer connected to the matching circuit may be defined based at least in part on the capacitance of the capacitive component or an inductance of the inductor. Therefore, by adjusting values of the inductor and the capacitive component constituting the matching circuit, the first resonance frequency and the second resonance frequency can be set to desired values, and the band in which the transmission power of the transducer is stabilized is set to a desired band.

In the amplifier circuit, according to the present aspect, the matching circuit may exclude a transformer. Further, since the amplifier circuit does not include the transformer, the amplifier circuit can be miniaturized.

In accordance with another example embodiment, the sonar for transmitting ultrasonic waves into water, generated from the transducer is described. The sonar includes the amplifier circuit according to the first aspect of the disclosure. Therefore, the band in which the transmission power of the transducer connected to the matching circuit is stable, can be expanded. Thus, the ultrasonic wave is transmitted from the transducer more stably in a wide band. Further, according to the present disclosure, it is possible to provide the amplifier circuit and the sonar capable of effectively expanding the band in which transmission power of the transducer is stable.

The effect or significance of the present disclosure will be further clarified by the following description of the embodiments. However, the embodiments shown below are only examples for implementing the present disclosure, and the present disclosure is not limited in any way to the embodiments described below.

FIG. 1 is a diagram schematically illustrating a state in which a sonar searches underwater, according to an embodiment of the present disclosure;

FIG. 2 is a block diagram illustrating a configuration of the sonar, according to an embodiment of the present disclosure;

FIG. 3 is a diagram illustrating a configuration of an amplifier circuit, according to an embodiment of the present disclosure;

FIG. 4(a) is a diagram illustrating an equivalent circuit of a transducer, according to an embodiment of the present disclosure;

FIG. 4(b) is a diagram illustrating the equivalent circuit of the transducer at resonance frequency, according to an embodiment of the present disclosure;

FIG. 5 is a graph illustrating impedance characteristics according to a comparative example;

FIG. 6 is a graph illustrating impedance characteristics, according to an embodiment of the present disclosure;

FIG. 7 is a graph illustrating phase characteristics of the transducer connected to the matching circuit according to the comparative example, and according to an embodiment of the present disclosure;

FIG. 8 is a graph illustrating transmission power of the transducer in the configuration of an embodiment of the present disclosure and the comparative example;

FIG. 9 is an enlarged view of a frequency band near the centre of FIG. 8;

FIG. 10 is a diagram illustrating an example of a configuration of the transducer with a matching layer, according to another embodiment of the present disclosure;

FIG. 11(a) is a diagram illustrating the equivalent circuit of the transducer with the matching layer, according to the another embodiment of the present disclosure;

FIG. 11(b) is a diagram illustrating an equivalent circuit of the transducer with a plurality of matching layers stacked and fixed to the transducer, according to a modification of the another embodiment of the present disclosure; and

FIG. 12 is the graph illustrating impedance characteristics, according to the another embodiment of the present disclosure.

Some embodiments of this disclosure, illustrating its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to the listed item or items.

It should also be noted that as used herein and in the appended claims, the singular forms "a," "an," and "the" include plural references unless the context clearly dictates otherwise. Although any apparatus and method similar or equivalent to those described herein can be used in the practice or testing of embodiments of the present disclosure, the apparatus and methods are now described.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Embodiments of the present disclosure will be described below with reference to the drawings. For convenience, XYZ axes orthogonal to each other are appropriately appended to the drawings. An X-axis direction and a Y-axis direction are horizontal, and a Z-axis direction is vertical. The positive Y-axis direction is the direction in which a ship travels.

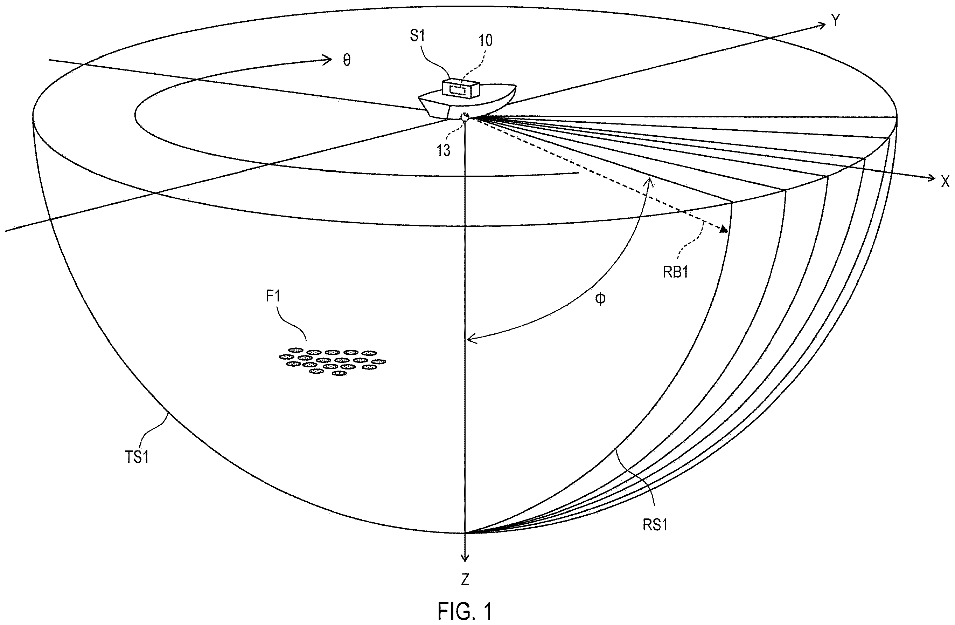

FIG. 1 is a diagram schematically illustrating a state in which a sonar 10 searches underwater, according to an embodiment of the present disclosure. In FIG. 1, $\theta$ is an azimuth angle around a transducer assembly 13 installed on a bottom of a ship S1, and $\varphi$ is a depression angle from a horizontal plane (X-Y plane). In one embodiment, the sonar 10 may include the transducer assembly 13 installed on the bottom of the ship S1. Further, ultrasonic waves may be transmitted from the transducer assembly 13 to a semi-spherical transmission space TS1 and resulting reflected waves may be received by the transducer assembly 13. Further, the transducer assembly 13 may include a plurality of transducers for transmitting and receiving ultrasonic waves. The transducers may be arranged, for example, in a hemispherical or cylindrical shape. A reception signal corresponding to an intensity (echo intensity) of the reflected wave received by each transducer is generated for each transducer. It can be noted that the sonar 10 may form a plurality of reception beams RB1 distributed in the azimuth angle $\theta$ direction and the depression angle $\varphi$ direction by beamforming the reception signals.

In one embodiment, the sonar 10 may generate the plurality of reception beams RB1 in fan-shaped reception spaces RS1 extending in the depression angle $\varphi$ direction. Further, the plurality of reception beams RB1 may be formed in each reception space RS1 with a predetermined resolution in the depression angle $\varphi$ direction. The reception spaces RS1 may be set at a predetermined pitch over the entire circumference in the azimuth angle $\theta$ direction. Further, an actual pitch of the reception spaces RS1 may be smaller than the pitch illustrated in FIG. 1. It can be noted that a spread angle of the reception spaces RS1 in the depression angle $\varphi$ direction is, for example, 90 degrees.

In one embodiment, the sonar 10 may acquire the echo intensity with a given distance resolution for each reception beam RB1 formed in the reception spaces RS1. Thus, the echo intensity is acquired at the given distance resolution for each depression angle of each reception beam RB1. The sonar 10 may integrate the echo intensity of each depression angle and each distance acquired for each reception space RS1 with respect to all the reception spaces RS1. It can be noted that, such use of the sonar 10 may facilitate acquiring an echo signal in which the echo intensity is three-dimensionally distributed in the transmission space TS1.

The sonar 10 may display an echo image showing a three-dimensional distribution of echo intensity on a display module by using the acquired echo signal. Each three-dimensional position on the echo image is coloured according to the echo intensity. For example, a position of a fish school F1 on the echo image is assigned a colour (for example, red) associated with a high echo intensity. Further, a user can grasp targets such as the fish school F1 by referring to the colour distribution on the echo image.

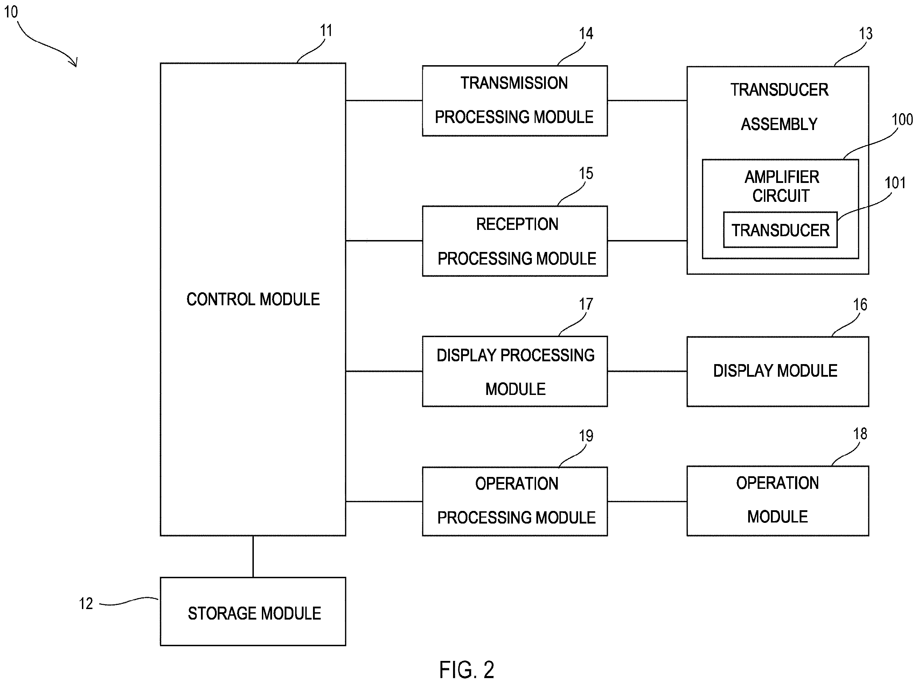

FIG. 2 is a block diagram illustrating a configuration of the sonar 10, according to a present embodiment of the present disclosure. In one embodiment, the sonar 10 may include a control module 11, a storage module 12, the transducer assembly 13, a transmission processing module 14, a reception processing module 15, a display module 16, a display processing module 17, an operation module 18, and an operation processing module 19. The transducer assembly 13 may be installed in the bottom of the ship S1 as described above, and other components such as the control module 11 may be installed in a wheelhouse of the ship S1.

Further, the control module 11 may be provided with an arithmetic processing circuit such as a CPU (Central Processing Unit) that executes control processing according to a program stored in the storage module 12. The storage module 12 may include a storage medium such as a ROM (Read Only Memory), a RAM (Random Access Memory), and a hard disk. The storage module 12 stores the program for the control module 11 to execute the control processing.

In one embodiment, the transducer assembly 13 may include one or more transducers 101. Further, the one or more transducers 101 may be arranged in a hemispherical or cylindrical shape. Each transducer 101 may transmit ultrasonic waves to the transmission space TS1 in FIG. 1 for each processing step (ping) of transmitting and receiving waves and receive the reflected waves. The transducer assembly 13 may include an amplifier circuit 100 as a configuration for transmitting waves. The amplifier circuit 100 may amplify a voltage of a transmission signal and supply it to the transducer 101.

In accordance with the control from the control module 11, the transmission processing module 14 outputs the transmission signal to the transducer assembly 13 for transmitting ultrasonic waves. The reception processing module 15 may generate the reception signal by processing a signal outputted by each transducer of the transducer assembly 13 that receives the reflected wave, and outputs the generated reception signal to the control module 11.

Further, the control module 11 may form the plurality of reception beams distributed in the azimuth angle θ direction and the depression angle φ direction by beamforming the reception signals acquired from the respective transducers. The control module 11 may acquire echo signals in the directions of the respective reception beams (the directions of the given azimuth angles θ and depression angles φ). The echo signal acquired for each reception beam is the signal indicating the echo intensity that changes according to the elapsed time from a transmission timing of the ultrasonic wave.

In one embodiment, the elapsed time from the transmission timing may correspond to a distance from the transducer assembly 13 in the direction of each reception beam. Further, the control module 11 may acquire the echo intensity of each distance position in the direction of each reception beam from the echo signal of each reception beam by associating the elapsed time from the transmission timing with the distance. The echo intensity may be acquired with a given distance resolution.

In one embodiment, the display module 16 includes a display device such as a liquid crystal display. The display processing module 17 may cause the display module 16 to display the echo image in response to the control from the control module 11. The operation module 18 may be provided with an input means such as an operation key or a mouse. The operation processing module 19 may output a signal corresponding to an operation on the operation module 18 to the control module 11. The user may, for example, change a viewpoint of the echo image by operating the operation module 18. Further, the display module 16 and the operation module 18 may be constituted by a liquid crystal panel in which a touch panel is superimposed on the liquid crystal display.

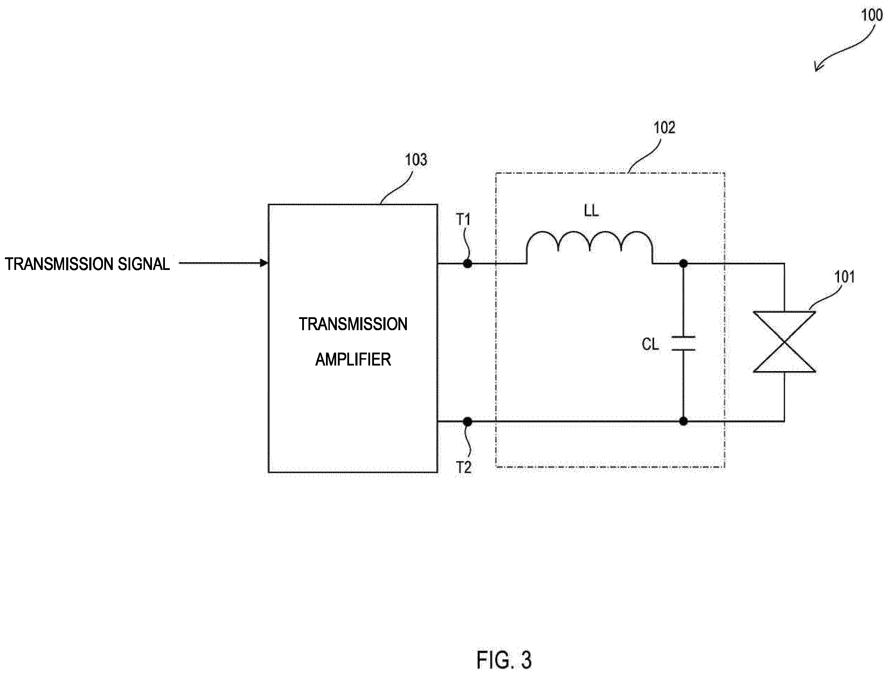

FIG. 3 is a diagram illustrating a configuration of the amplifier circuit 100 in FIG. 2, according to an embodiment of the present disclosure. In one embodiment, FIG. 3 illustrates a configuration for driving one transducer 101. The same configuration in FIG. 3 may be provided for each of the one or more transducers 101. The amplifier circuit 100 may include the transducer 101, a matching circuit 102, and a transmission amplifier 103.

In one embodiment, the transducer 101 may include a piezoelectric element. Further, the transducer 101 may output ultrasonic waves when the voltage corresponding to the transmission signal is applied thereto. Further, the matching circuit 102 may include a capacitive component CL and an inductor LL. The capacitive component CL may be connected in parallel with the transducer 101. Further, the inductor LL may be connected in series to the parallel connection of the capacitive component CL and the transducer 101. The capacitive component CL may be a capacitor or other component (for example, cables, etc.) as long as it has the capacitance of a given value. The transmission amplifier 103 may amplify positively and negatively the voltage at a frequency corresponding to the transmission signal and output it at terminal T1. Terminal T2 is connected to the ground.

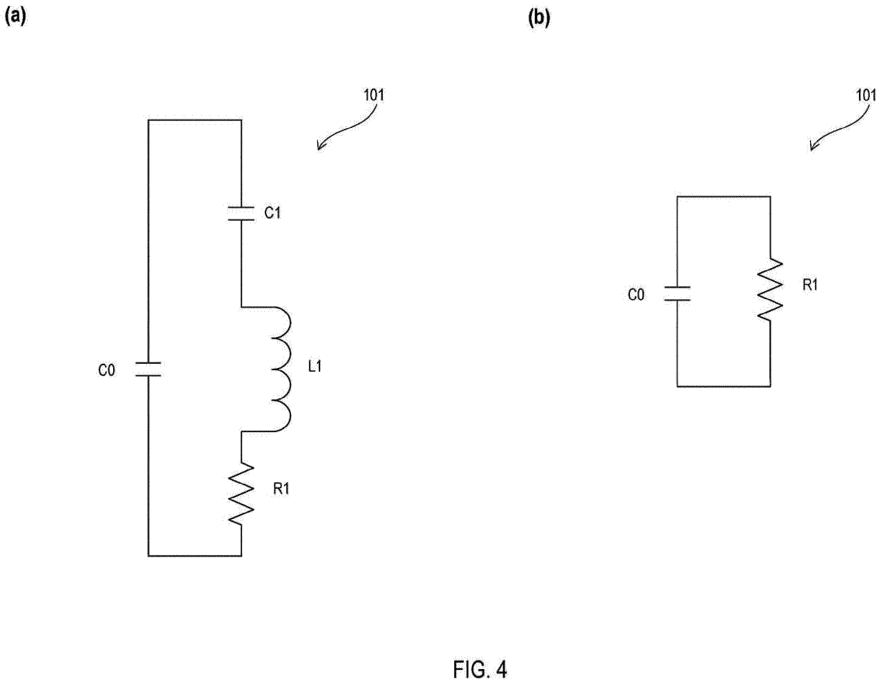

FIG. 4(a) is a diagram illustrating an equivalent circuit of the transducer 101, according to an embodiment of the present disclosure. The equivalent circuit of the transducer 101 may be represented by a circuit in which a capacitor C1, an inductor L1, and a resistor R1 are connected in series, and a capacitor C0 is connected in parallel to the series connection. In the configuration illustrated in FIG. 3, for example, by matching a resonance frequency of the transducer 101 connected to the matching circuit 102 with the resonance frequency of the equivalent circuit of the transducer 101 illustrated in FIG. 4(a), an impedance at the resonance frequency can be effectively reduced. Thus, the voltage supplied to the transducer 101 can be increased, and transmission power can be effectively increased. It can be noted that, the configuration may be referred to as a "comparative example", hereinafter.

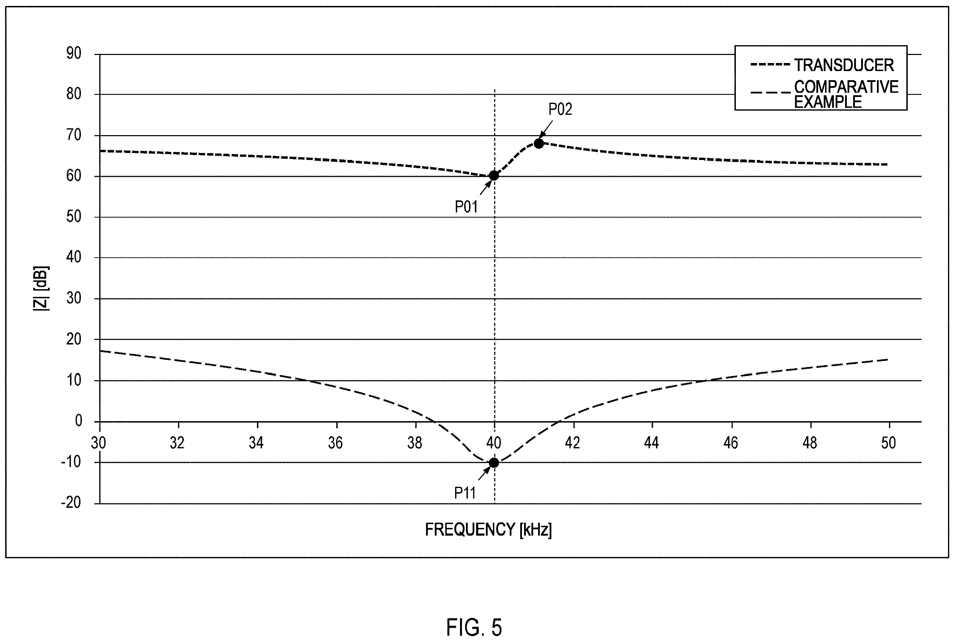

FIG. 5 is a graph illustrating impedance characteristics according to the comparative example. The upper graph of FIG. 5 illustrates an example of impedance characteristic of the equivalent circuit of the transducer 101 of FIG. 4(a). The lower graph of FIG. 5 illustrates an example of impedance characteristic of the transducer 101 connected to the matching circuit 102.

Further, as illustrated in the upper graph of FIG. 5, the impedance characteristic of the equivalent circuit of the transducer 101 has a resonance point P01 and an anti-resonance point P02. The frequency at the resonance point P01, that is, the resonance frequency is the frequency when the value obtained by multiplying a capacitance of the capacitor C1 and an inductance of the inductor L1 in the equivalent circuit of FIG. 4(a) is 1. Therefore, the equivalent circuit of the transducer 101 at the resonance point is represented by the circuit of FIG. 4(b).

In the comparative example, as illustrated in the lower part of FIG. 5, values of the inductor LL and the capacitive component CL of the matching circuit 102 may be adjusted so that the resonance frequency (resonance point P11) of the transducer 101 connected to the matching circuit 102 matches the resonance frequency (resonance point P01) of the equivalent circuit of the transducer 101. In one example embodiment, the value (i.e., capacitance) $C_L$ of component CL is set to about 100 times or more of value $C_0$ of the capacitor C0 in FIG. 4(a), and value (i.e., inductance) $L_L$ of the inductor LL is set to satisfy $\omega^2 \times L_L \times C_L = 1$ at the resonance frequency so that a circuit characteristic of the matching circuit 102 does not collapse due to interference with the transducer 101.

It can be noted that, as shown in the lower part of FIG. 5, the impedance of the transducer 101 connected to the matching circuit 102 at the resonance point P11 may be effectively lowered from the impedance of the transducer 101 in the upper part of FIG. 5. Therefore, by setting the frequency of the transmission signal near the resonance point P11, the transmission power of the transducer 101 may be effectively increased.

Further, in the configuration of the comparative example, since only one resonance point P11 exists in the impedance characteristic of the transducer 101 connected to the matching circuit 102, the band in which the transmission power of the transducer 101 is stable becomes considerably narrow as described later. Therefore, in the present embodiment, the values of the inductor LL and the capacitive component CL of the matching circuit 102 may be adjusted so that the impedance characteristic of the transducer 101 connected to the matching circuit 102 has two resonance points (resonance frequencies).

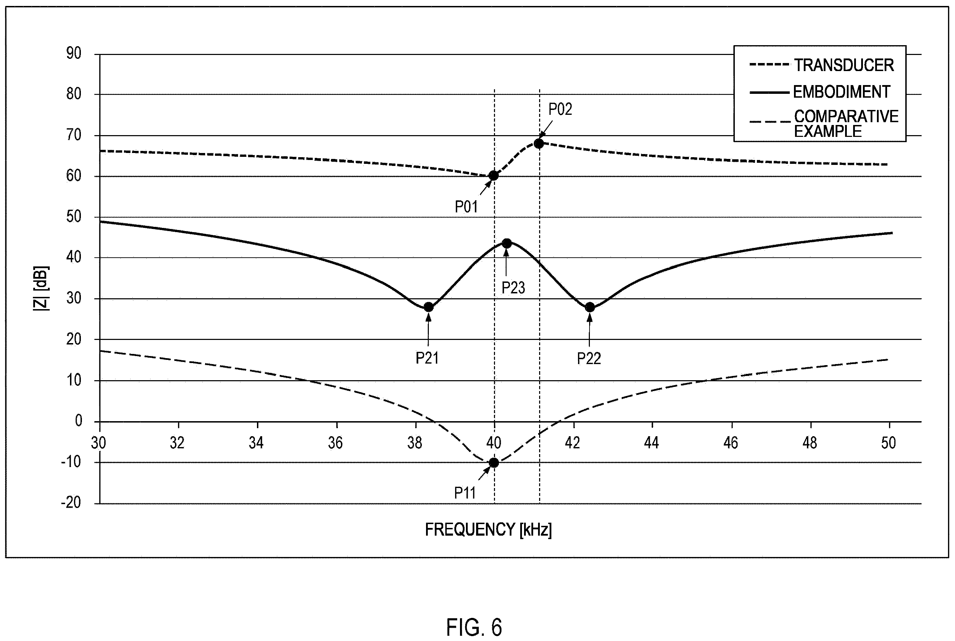

FIG. 6 is a graph illustrating the impedance characteristics, according to an embodiment of the present disclosure. In FIG. 6, the impedance characteristics according to the embodiment is illustrated. In the upper and lower parts of FIG. 6, the impedance characteristics of the transducer 101 and the comparative example illustrated in FIG. 5 are illustrated for comparison.

As illustrated in the middle of FIG. 6, the impedance characteristic of the transducer 101 connected to the matching circuit 102 has two resonance points P21 and P22, and one anti-resonance point P23. The resonance frequency at a resonance point P22 may be higher than the anti-resonance frequency at the anti-resonance point P02 of the transducer 101. The resonance frequency at a resonance point P21 may be lower than the resonance frequency at the resonance point P01 of the transducer 101. Therefore, the resonance point P01 (resonance frequency) and the anti-resonance point P02 (anti-resonance frequency) of the transducer 101 illustrated in the upper part are located between the resonance points P21 and P22 (resonance frequencies).

In the embodiment, the values of the inductor LL and the capacitive component CL of the matching circuit 102 are adjusted so that the two resonance points P21 and P22 satisfy the above conditions with respect to the resonance point P01 and the anti-resonance point P02 of the transducer 101. The resonance frequencies and the anti-resonance frequency of the transducer 101 connected to the matching circuit 102 may be calculated from the following equations.

Resonance frequencies:

$$\omega^2 \left( L_1 \pm \sqrt{\frac{c_0 + c_L + c_1}{c_1}} \cdot L_L \right) C_1 = 1 \ldots (1)$$

Anti-resonance frequency:

$$\omega^2 L_1 \frac{(c_0 + c_L) c_1}{c_0 + c_L + c_1} = 1 \ldots (2)$$

In the equations (1) and (2), $L_L$ and $C_L$ are the values of the inductor LL and the capacitive component CL in the matching circuit 102 illustrated in FIG. 3, respectively, and $L_1$, $C_0$ and $C_1$ are the values of the inductor L1 and the capacitors C0 and C1 in the equivalent circuit illustrated in FIG. 4(a), respectively. The resonance frequencies and the anti-resonance frequency are calculated as the value of f when expression $\omega = 2\pi f$ is substituted into the above expressions (1) and (2).

In an example embodiment, the value of the capacitive component CL is set to approximately twice the value of the capacitor C0 of FIG. 4(a). The value of the inductor LL is calculated from the above equations (1) and (2) so that the two resonance points P21 and P22 (resonance frequencies) and the anti-resonance point P23 (anti-resonance frequency) satisfy the relationship illustrated in FIG. 6.

In one embodiment, the values $L_L$ and $C_L$ of the inductor LL and the capacitive component CL in the matching circuit 102 may be adjusted so that the impedance of the transducer 101 connected to the matching circuit 102 becomes substantially the same value at the two resonance points P21 and P22. Thus, a fluctuation range of impedance between the resonance points P21 and P22 and the anti-resonance point P23 can be suppressed, and as described later, a frequency band at which the transmission power of the transducer 101 is stable can be widened.

As illustrated in FIG. 6, in the configuration of the embodiment, when the matching circuit 102 is connected to the transducer 101, the resonance point P01 of the transducer 101 before the connection shifts to the resonance point P21 on the low-frequency side after the connection, and in the vicinity of the frequency that was the resonance point P01 in the transducer 101 before the connection, not a resonance point but the anti-resonance point P23 appears. Further, an anti-resonance point may be unsuitable for transmitting high power because of its high impedance characteristic. However, since this anti-resonance point P23 is generated by the influence of the resonance points P21 and P22 generated by interference between the electrical resonance point originally possessed by the transducer 101 and the matching circuit 102, the impedance of the anti-resonance point P23 becomes lower than the impedance of the transducer 101 itself.

In one embodiment, comparing the graphs in the middle and lower parts of FIG. 6, compared to the matching circuit of the comparative example which is designed to have one resonance point, with the matching circuit 102 of the embodiment, the minimum impedance is higher. However, in the configuration of the embodiment, since the impedance characteristic of the transducer 101 connected to the matching circuit 102 has two resonance points P21 and P22 (resonance frequencies), a bandwidth in which the transmission power of the transducer 101 is stable can be expanded compared with the case where there is only one resonance point P11 (resonance frequency) as in the comparative example, and a stable transmission of ultrasonic waves in a wide band is possible. This will be described below.

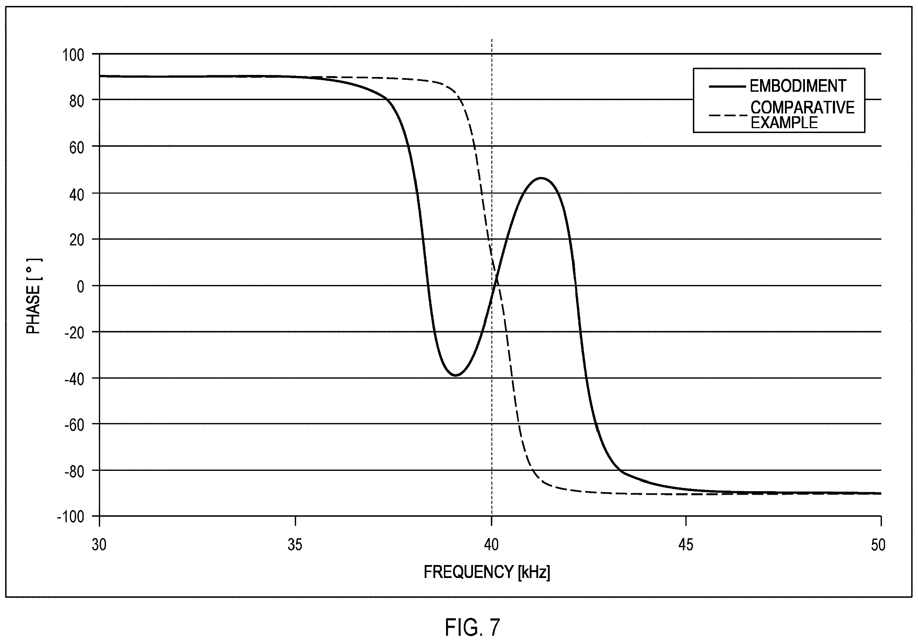

FIG. 7 is a graph illustrating the phase characteristics of the transducer 101 connected to the matching circuit 102 according to the embodiment and according to the comparative example. As illustrated in FIG. 7, in the configuration of the comparative example, the phase of the transducer 101 connected to the matching circuit 102 rapidly inverts to a negative value in the vicinity of the resonance frequency (here, 40 kHz) of the resonance point P11.

In one embodiment, in the configuration of the embodiment, the phase of the transducer 101 connected to the matching circuit 102 may have a small positive and negative amplitude around the anti-resonance frequency (in this case, a frequency slightly higher than 40 kHz) of the anti-resonance point P23 and may then converge to a negative value. The frequencies of the positive and negative peak positions in this amplitude correspond to the resonance frequencies of the resonance points P21 and P22 in FIG. 6.

Assuming that the phase of the transducer 101 connected to the matching circuit 102 is θ, the transmission power of the transducer 101 may be calculated by the following equation:

$$\text{Transmission power} = (V^2/Z) \times \cos\theta \; ... \; (3),$$

wherein V is a value of the voltage supplied from the terminal T1 of FIG. 3 to the matching circuit 102, and Z is the impedance of the transducer 101 connected to the matching circuit 102.

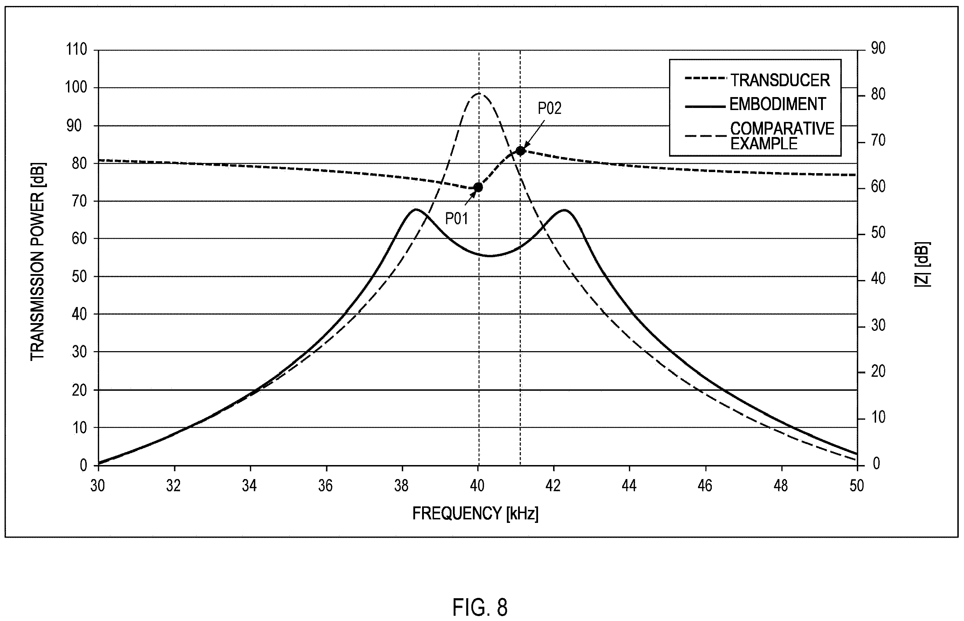

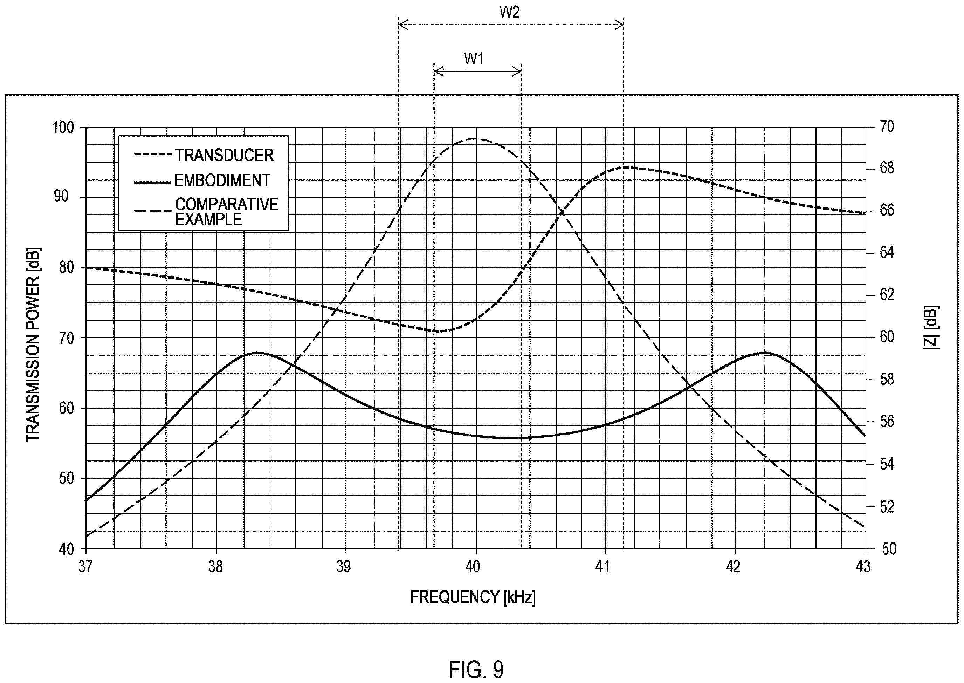

FIG. 8 is a graph illustrating the transmission power of the transducer 101 in the configuration of the embodiment and the comparative example. FIG. 9 is an enlarged view of a frequency band near the centre of FIG. 8. FIGS. 8 and 9 illustrate graphs illustrating the transmission power of the transducer 101 in the configuration of the embodiment and the comparative example, and a graph (dotted line) illustrating the impedance characteristic of the transducer 101 as in FIGS. 5 and 6.

As illustrated in FIG. 8, in the comparative example, the transmission power of the transducer 101 rapidly increases in the vicinity of the resonance point P01 (resonance frequency) of the transducer 101. In one embodiment, the change of the transmission power near the resonance point P01 may be gradual as compared with the comparative example. This is because, as illustrated in FIG. 7, the phase change in the embodiment is smaller than that in the comparative example, and therefore the transmission power is more controlled with the phase parameter θ of equation (3), compared with the comparative example.

Referring to FIG. 9, it can be seen that in the embodiment, the change of the transmission power when moving away from a centre frequency may be significantly suppressed compared to the comparative example. For example, using the definition of a general band-pass filter, when a bandwidth of the frequency in which the transmission power varies by 3 dB from the value of the centre frequency is compared, in the configuration of the comparative example, a 39.7 ~ 40.3 kHz band W1 is in the variation range of 3 dB, while in the configuration of the embodiment, a 39.4 ~ 41.2 kHz band W2 is in the variation range of 3 dB. Therefore, in the configuration of the embodiment, the band that can be stably transmitted can be remarkably expanded as compared with the configuration of the comparative example. Thus, in the configuration of the embodiment, ultrasonic waves can be transmitted more stably.

As illustrated in FIG. 6, the impedance characteristic of the transducer 101 connected to the matching circuit 102 has the resonance point P21 (first resonance frequency) and the resonance point P22 (second resonance frequency) higher than the resonance point P21 (first resonance frequency). As a result, as illustrated in FIG. 9, the transmission power of the transducer 101 can be stabilized in the vicinity of the band W2 across the resonance point P21 (first resonance frequency) and the resonance point P22 (second resonance frequency). Thus, the band in which the transmission power of the transducer 101 can be stabilized can be effectively expanded.

Further, as illustrated in FIG. 6, the resonance point P22 (second resonance frequency) of the transducer 101 connected to the matching circuit 102 may be higher than the anti-resonance point P02 (anti-resonance frequency) of the transducer 101. Thus, as illustrated in FIG. 9, the band in which the transmission power of the transducer 101 is stabilized can be expanded to the high-frequency side. It can be noted that, the resonance point P21 (first resonance frequency) of the transducer 101 connected to the matching circuit 102 may be lower than the resonance point P01 (resonance frequency) of the transducer 101. Thus, as illustrated in FIG. 9, the band in which the transmission power of the transducer 101 is stabilized can be expanded to the low-frequency side.

In one embodiment, as illustrated in FIG. 6, the resonance point P01 (resonance frequency) and the anti-resonance point P02 (anti-resonance frequency) of the transducer 101 may be located between the resonance point P21 (first resonance frequency) and the resonance point P22 (second resonance frequency) of the transducer 101 connected to the matching circuit 102. In other words, the resonance point P21 (first resonance frequency) and the resonance point P22 (second resonance frequency) may be located outside the resonance point P01 (resonance frequency) and the anti-resonance point P02 (anti-resonance frequency) of the transducer 101, respectively. Further, as illustrated in FIG. 9, the band in which the transmission power of the transducer 101 is stabilized can be expanded to both the low-frequency side and the high-frequency side.

In another embodiment, as illustrated in FIG. 6, the impedance characteristic of the transducer 101 connected to the matching circuit 102 may further have the anti-resonance point P23 (first anti-resonance frequency) between the resonance point P21 (first resonance frequency) and the resonance point P22 (second resonance frequency), and the anti-resonance point P23 (first anti-resonance frequency) of the transducer 101 connected to the matching circuit 102 may be lower than the anti-resonance point P02 (anti-resonance frequency) of the transducer 101.

In yet another embodiment, as illustrated in FIG. 6, the impedance of the transducer 101 connected to the matching circuit 102 at the anti-resonance point P23 (first anti-resonance frequency) may be lower than the impedance characteristic of the transducer 101 in a range between the resonance points P21 and P22 (first and second resonance frequencies). Further, the impedance of the transducer 101 connected to the matching circuit 102 can be made lower than the impedance of the transducer 101 itself in the vicinity of the band W2 across the resonance point P21 (first resonance frequency) and the resonance point P22 (second resonance frequency), and the transmission power of the transducer can be enhanced.

In yet another embodiment, as illustrated in FIG. 6, the impedance characteristic of the transducer 101 may have exactly one resonance point P01 (resonance frequency) and exactly one anti-resonance point P02 (anti-resonance frequency), and the impedance characteristic of the transducer 101 connected to the matching circuit 102 may have exactly two resonance points P21 and P22 (resonance frequencies). Further, the impedance of the transducer 101 connected to the matching circuit 102 can be lowered from the impedance of the transducer 101 itself in the vicinity of the band across the two resonance points P21 and P22 (resonance frequencies), and the transmission power of the transducer can be enhanced.

Further, as discussed above and illustrated in FIG. 3, the matching circuit 102 may include the capacitive component CL and the inductor LL, the capacitive component CL may be connected in parallel with the transducer 101, and the inductor LL may be connected in series with the parallel connection. In one embodiment, the impedance characteristic of the transducer 101 connected to the matching circuit 102 may be adjusted to further have the anti-resonance point P23 (first anti-resonance frequency) between the resonance point P21 (first resonance frequency) and the resonance point P22 (second resonance frequency), as illustrated in FIG. 6. Here, the anti-resonance frequency (first anti-resonance frequency) at the anti-resonance point P23 may be determined by the above equation (2) based at least in part on the capacitance $C_L$ of the capacitive component CL.

Further, the resonance frequency (first resonance frequency) at the resonance point P21 and the resonance frequency (second resonance frequency) at the resonance point P22 of the transducer 101 connected to the matching circuit 102 may be determined by the above equation (1) based at least in part on the capacitance $C_L$ of the capacitive component CL or the inductance $L_L$ of the inductor LL.

Therefore, by adjusting the values of the inductor LL and the capacitive component CL constituting the matching circuit 102, the first resonance frequency and the second resonance frequency can be set to desired values, and the band in which the transmission power of the transducer is stabilized can be set to the desired band.

It can be noted that as illustrated in FIG. 3, the matching circuit 102 may not include a transformer. Thus, the amplifier circuit 100 can be miniaturized. Further, as illustrated in FIG. 2, the sonar 10 may include the amplifier circuit 100 of FIG. 3. Therefore, the amplifier circuit 100 can form a stable band with a small impedance change while reducing the impedance of the transducer 101 connected to the matching circuit 102 as described above. Thus, the ultrasonic wave can be transmitted from the transducer 101 more stably in a wide band.

In the above embodiment, as illustrated in FIG. 6, the impedance characteristic of the transducer 101 has one resonance frequency (resonance point P01) and one anti-resonance frequency (anti-resonance point P02). On the other hand, in another embodiment, the transducer 101 is fixed to a matching layer, and the impedance characteristic of the transducer 101 fixed to the matching layer has a plurality of anti-resonance frequencies. That is, in another embodiment, a so-called transducer with a matching layer is used.

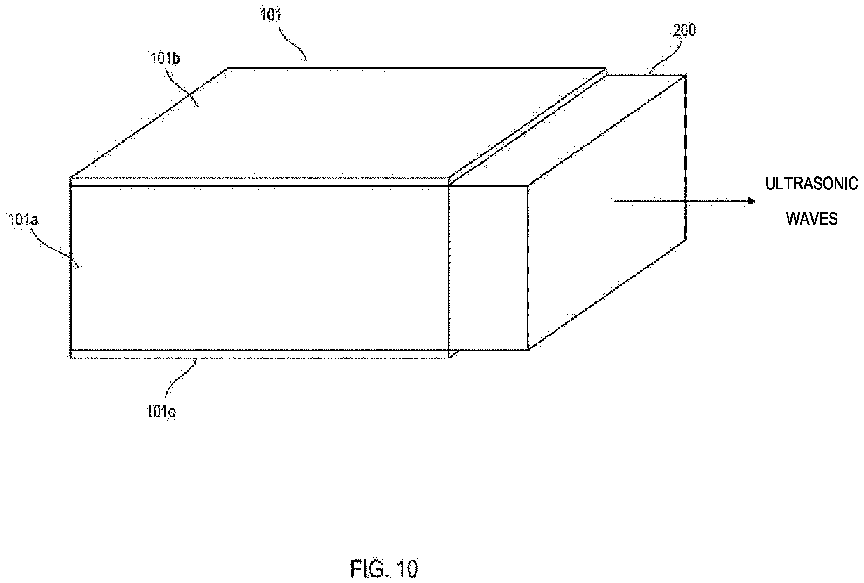

FIG. 10 is a diagram illustrating an example of a configuration of the transducer 101 with the matching layer. The transducer 101 may include a piezoelectric element 101a, an upper electrode 101b, and a lower electrode 101c. The piezoelectric element 101a may have a cuboid shape. The shape of the piezoelectric element 101a may not be limited to the cuboid, but may be any other shape such as a cube. A matching layer 200 may be fixed to one side surface of the piezoelectric element 101a by an adhesive or the like. A voltage inverting positive and negative at a given frequency may be applied to the upper electrode 101b via the terminal T1 of the transmission amplifier 103 illustrated in FIG. 3, and the lower electrode 101c may be connected to the ground. Thus, ultrasonic waves are outputted from a side surface of the matching layer 200.

Further, the configuration of the transducer 101 with the matching layer may not be limited to the configuration of FIG. 10, but may be another configuration. The transducer 101 in one embodiment has the configuration in which the matching layer 200 is removed from the configuration in FIG. 10.

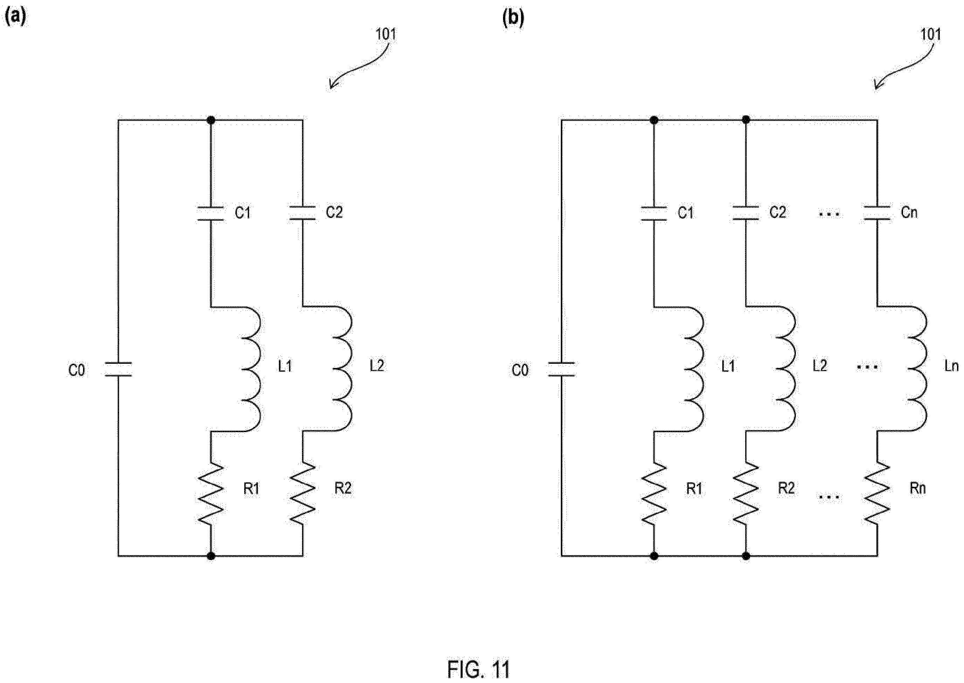

FIG. 11(a) is a diagram illustrating an equivalent circuit of the transducer 101 with the matching layer illustrated in FIG. 10. In the equivalent circuit of FIG. 11(a), as compared with FIG. 4(a), a capacitor C2, an inductor L2, and a resistor R2 corresponding to the matching layer 200 are further connected in parallel to the capacitor C0. When the matching layer 200 comprising a plurality of layers is fixed to the transducer 101, the equivalent circuit has the configuration illustrated in FIG. 11(b).

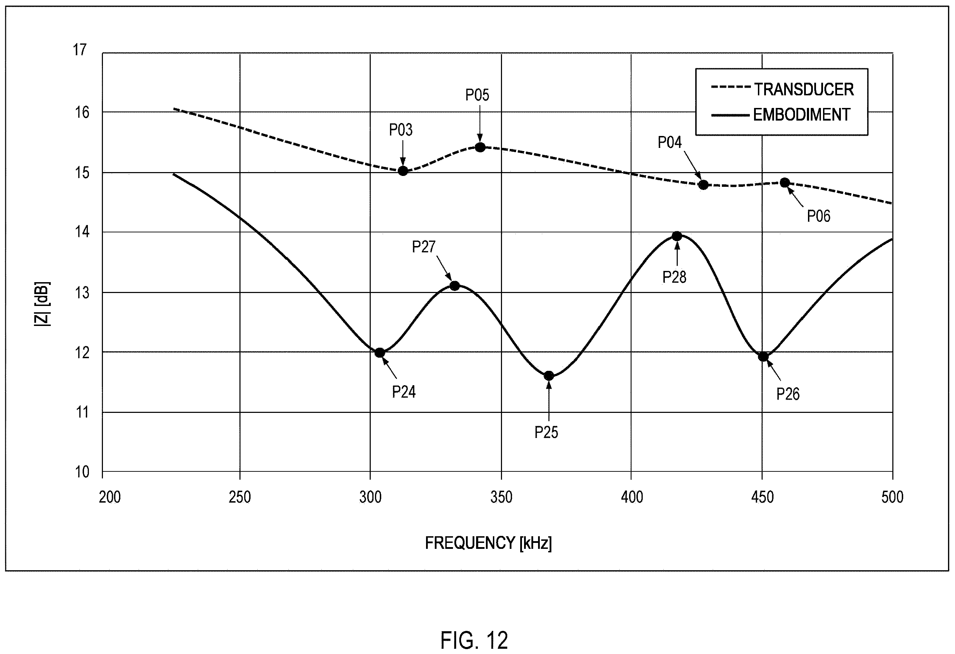

FIG. 12 is a graph illustrating impedance characteristics according to another embodiment. In FIG. 12, an assumed size of the transducer 101 is different from that in FIG. 6, and therefore frequency range of the horizontal axis is different from that in FIG. 6. The impedance characteristic illustrated in FIG. 12 is an example and may vary depending on the size of the transducer 101, the structure of the matching layer 200, and the like.

The upper part of FIG. 12 may illustrate the impedance characteristic of the transducer 101 fixed to the matching layer 200. As described above, in another embodiment, since the transducer 101 is fixed to the matching layer 200, from the equivalent circuit illustrated in FIG. 11(a), the impedance characteristic of the transducer 101 fixed to the matching layer 200 has two resonance points P03 and P04 and two anti-resonance points P05 and P06. When the matching layer 200 to which the transducer 101 is fixed includes a plurality of layers, from the equivalent circuit of FIG. 11(b), the impedance characteristic of the transducer 101 fixed to the matching layer 200 may have more resonance points and more anti-resonance points.

The lower part of FIG. 12 may illustrate the impedance characteristic of the transducer 101 fixed to the matching layer 200 and connected to the matching circuit 102. Further, as illustrated in the lower part of FIG. 12, the impedance characteristic of the transducer 101 fixed to the matching layer 200 and connected to the matching circuit 102 has 3 resonance points P24, P25, P26 and 2 anti-resonance points P27, P28. Further, as illustrated in FIG. 12, the resonance frequency at the resonance point P26 is higher than an average of the anti-resonance frequencies at the two anti-resonance points P05 and P06 of the transducer 101 fixed to the matching layer 200.

As illustrated in the upper part of FIG. 12, when the impedance characteristic of the transducer 101 fixed to the matching layer 200 has two resonance points P03 and P04, the impedance of the transducer 101 fixed to the matching layer 200 and connected to the matching circuit 102 is expressed by the following equation.

$$|Z| = f(\omega) = j\omega L_L + \left( \frac{1}{j\omega(C_L+C_0)} + \frac{1}{\left(j\omega L_1 + \frac{1}{j\omega C_1} + R_1\right)} + \frac{1}{\left(j\omega L_2 + \frac{1}{j\omega C_2} + R_2\right)} \right)^{-1} \dots (4)$$

In equation (4), $L_L$ and $C_L$ are respectively the values of the inductor LL and the capacitive component CL in the matching circuit 102 illustrated in FIG. 3, and $L_1$, $L_2$, $C_0$, $C_1$, $C_2$, $R_1$, and $R_2$ are respectively the values of the inductors L1, L2, capacitors C0, C1, C2 and resistors R1, R2 in the equivalent circuit illustrated in FIG. 11(a). Further, at the resonance points and the anti-resonance points, the value obtained by differentiating the above equation (4) becomes 0, and the following relationship is satisfied.

$$\frac{d}{d\omega} f(\omega) = 0 \dots (5)$$

Assuming that solutions satisfying the above equation (5) are ω1, ω2, ω3, ω4, and ω5 (ω1 < ω2 < ω3 < ω4 < ω5), ω1, ω3, and ω5 are resonance points, and ω2 and ω4 are anti-resonance points. Here, assuming that an impedance variation width in a target band across the three resonance points is ΔZ (for example, 3 decibels), by setting the values of the inductor LL and the capacitive component CL of the matching circuit 102 based on the values of inductors L1, L2, capacitors C0, C1, C2, and resistors R1, R2 in the equivalent circuit illustrated in FIG. 11(a) so that the following three equations are satisfied, maximum bandwidth having the impedance variation width ΔZ can be realized.

$$f(\omega2) \fallingdotseq f(\omega4) \ ... \ (6)$$

$$f(\omega1) \fallingdotseq f(\omega3) \fallingdotseq f(\omega5) \ ... \ (7)$$

$$f(\omega2) \fallingdotseq f(\omega1) \times 10 \ (\Delta Z/20) \ ... \ (8)$$

Further, by applying the expression ω=2πf to the values ω1, ω2, ω3, ω4, and ω5 thus obtained, the frequencies of the resonance points and the anti-resonance points are respectively calculated.

The graph at the bottom of FIG. 12 illustrates an example. In this example, the impedance values at the resonance points P24, P25, and P26 do not exactly coincide with each other due to effect such as the size of the transducer 101, but are substantially the same, thus satisfying the equation (7) above. Similarly, the impedance values at the anti-resonance points P27 and P28 do not exactly coincide with each other, but are substantially the same, thus satisfying the equation (6) above. Thus, the bandwidth in which the impedance variation width ΔZ becomes 3 dB can be expanded to about 250 kHz (in FIG. 12, approximately 250 ~ 500 kHz). Therefore, based on the equation (3), the bandwidth in which the transmission power of the transducer 101 is stabilized can be expanded to about 250 kHz. Therefore, the ultrasonic wave can be stably transmitted over a wider band while lowering the impedance at the time of transmission.

In one embodiment, when the equivalent circuit of the transducer 101 fixed to the matching layer 200 is represented in FIG. 11(b) by increasing the number of layers of the matching layer 200, the resonance points and the anti-resonance points may be adjusted by the same method. In this case, the equation (4) above is modified to the following equation.

$$|Z| = f(\omega) = j\omega L_L + \left( \frac{1}{j\omega(C_L+C_0)} + \sum_1^n \frac{1}{\left(j\omega L_x + \frac{1}{j\omega C_x} + R_x\right)} \right)^{-1} ...(9)$$

In this case as well, co is acquired as resonance point or anti-resonance point when a differential of equation (9) is 0.

Further, the values of the inductor LL and the capacitive component CL of the matching circuit 102 are set so as to satisfy the conditions that the impedance values at the plurality of acquired resonance points are substantially the same, the impedance values at the plurality of acquired anti-resonance points are substantially the same, and a relationship between the resonance points and the anti-resonance points satisfies the equation (8) above. Thus, the maximum bandwidth having the impedance variation width ΔZ (for example, 3 dB) can be realized.

As illustrated in FIG. 10, the transducer 101 may be fixed to the matching layer 200, and the impedance characteristic of the transducer 101 fixed to the matching layer 200 may have a plurality of anti-resonance points P05 and P06 (anti-resonance frequencies), as illustrated in FIG. 12. The frequency (second resonance frequency) of the resonance point P26 of the transducer 101 fixed to the matching layer 200 and connected to the matching circuit 102 may be adjusted higher than an average of the frequencies (anti-resonance frequencies) of the plurality of anti-resonance points P05 and P06 of the transducer 101 fixed to the matching layer 200. Further, the impedance of the transducer 101 fixed to the matching layer 200 and connected to the matching circuit 102 can be stabilized in a vicinity of a band across the resonance point P24 (first resonance frequency) and the resonance point P26 (second resonance frequency), and the transmission power of the transducer 101 can be stabilized in the vicinity of this band. Therefore, the band for stabilizing the transmission power of the transducer can be effectively expanded, and the ultrasonic wave can be transmitted stably in a wider band.

In the above embodiments, as illustrated in FIG. 6, the values $C_L$ and $L_L$ of the capacitive component CL and the inductor LL of the matching circuit 102 are adjusted so that the impedances at the two resonance points P21 and P22 substantially coincide with each other. As a result, as illustrated in FIG. 9, a characteristic of the transmission power is substantially flattened in the band W2, and variation of the transmission power when moving away from the centre frequency is substantially suppressed.

Further, the matching circuit 102 may be designed to change the transmission power for each frequency by inclining a characteristic of the transmission power in a given band. In this case, according to this inclination, the values $C_L$ and $L_L$ of the capacitive component CL and the inductor LL of the matching circuit 102 may be adjusted so that the impedance at the resonance points P21 and P22 are different from each other.

Similarly, in another embodiment, the matching circuit 102 may be designed to incline the transmission power characteristic in a given band. In this case, it is sufficient to add aco (a is a coefficient corresponding to the desired inclination of the transmission power characteristic) to the right side of the f(co) equation in the equations (4) or (9) above to perform a design based on the same conditions as in the equations (5) to (8).

Further, in each of the above embodiments, the spread angle of the reception spaces RS1 in the depression angle φ direction is 90 degrees, but the present disclosure is not limited thereto. For example, the spread of the reception spaces RS1 in the depression angle φ direction may be made smaller than 90 degrees. For example, a two-dimensional sonar using an umbrella-shaped transmission beam may be used.

Further, it is not necessary for the sonar 10 to be a full-circle sonar (i.e., 360 deg.) that detects a target over the entire circumference in the azimuth angle θ direction. For example, the sonar may be a half-circle sonar (i.e., 180 deg.) or a forward-looking sonar. In addition, the embodiments of the present disclosure may be modified appropriately within the scope of the claims.

**Claims**

1. An amplifier circuit (100) to be used in a sonar (10), the amplifier circuit (100) comprising:

   a transducer (101) having an impedance characteristic, the impedance characteristic comprising a resonance frequency, and an anti-resonance frequency higher than the resonance frequency; and
   a matching circuit (102) connected to the transducer (101),
   wherein the impedance characteristic of the transducer (101) connected to the matching circuit (102) has a first resonance frequency and a second resonance frequency higher than the first resonance frequency.

2. The amplifier circuit (100) of claim 1, wherein the second resonance frequency of the transducer (101) connected to the matching circuit (102), is higher than the anti-resonance frequency of the transducer (101).

3. The amplifier circuit (100) of claim 1 or claim 2, wherein the first resonance frequency of the transducer (101) connected to the matching circuit (102), is lower than the resonance frequency of the transducer (101).

4. The amplifier circuit (100) of any preceding claim, wherein the resonance frequency and the anti-resonance frequency of the transducer (101) are between the first resonance frequency and the second resonance frequency of the transducer (101) connected to the matching circuit (102).

5. The amplifier circuit (100) of any preceding claim, wherein

   the impedance characteristic of the transducer (101) connected to the matching circuit (102) further has a first anti-resonance frequency between the first resonance frequency and the second resonance frequency, and
   the first anti-resonance frequency of the transducer (101) connected to the matching circuit (102), is lower than the anti-resonance frequency of the transducer (101).

6. The amplifier circuit (100) of claim 5, wherein an impedance of the transducer (101) connected to the matching circuit (102) at the first anti-resonance frequency is lower than the impedance characteristic of the transducer (101) in a range between the first resonance frequency and the second resonance frequency.

7. The amplifier circuit (100) of any preceding claim, wherein

   the impedance characteristic of the transducer (101) has one resonance frequency and one anti-resonance frequency, and
   the impedance characteristic of the transducer (101) connected to the matching circuit (102) has two resonance frequencies.

8.  The amplifier circuit (100) of any of claims 1 to 6, wherein

    the transducer (101) is fixed to a matching layer (200) and the impedance characteristic of the transducer (101) fixed to the matching layer (200) has a plurality of anti-resonance frequencies, and
    the second resonance frequency of the transducer (101) fixed to the matching layer (200) and connected to the matching circuit (102) is higher than an average of the plurality of anti-resonance frequencies of the transducer (101) fixed to the matching layer (200).

9.  The amplifier circuit (100) of any preceding claim, wherein the matching circuit (102) comprises a capacitive component (CL) and an inductor (LL), having the capacitive component (CL) connected in parallel with the transducer (101) and the inductor (LL) connected in series with the parallel connection of the capacitive component (CL) and the transducer (101).

10. The amplifier circuit (100) of claim 9, wherein

    the impedance characteristic of the transducer (101) connected to the matching circuit (102) has a first anti-resonance frequency between the first resonance frequency and the second resonance frequency, and
    the first anti-resonance frequency is defined based at least in part on a capacitance ($C_L$) of the capacitive component (CL).

11. The amplifier circuit (100) of claim 9 or claim 10, wherein the first resonance frequency and the second resonance frequency of the transducer (101) connected to the matching circuit (102) are defined based at least in part on a capacitance ($C_L$) of the capacitive component (CL) or an inductance ($L_L$) of the inductor (LL).

12. The amplifier circuit (100) of any preceding claim, wherein the matching circuit (102) does not comprise a transformer.

13. A sonar (10) for transmitting ultrasonic wave into water, generated from a transducer (101), comprising the amplifier circuit (100) of any of the preceding claims.

FIG. 1

FIG. 2

100

102

103

LL

TRANSMISSION SIGNAL

T1

TRANSMISSION
AMPLIFIER

CL

101

T2

FIG. 3

FIG. 4

FIG. 5

EP 4 215 938 A1

FIG. 6

FIG. 7

EP 4 215 938 A1

FIG. 8

FIG. 9

FIG. 10

EP 4 215 938 A1

EP 4 215 938 A1

(a)

(b)

101

101

FIG. 11

FIG. 12

EP 4 215 938 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 694 16 129 T2 (ENDRESS HAUSER GMBH CO [DE]) 1 July 1999 (1999-07-01) | 1-13 | INV. G01S7/521 G01S15/96 G10K11/02 |
| Y | * the whole document * | 8 | |
| X | US 2014/160892 A1 (LEE JEONG MIN [KR] ET AL) 12 June 2014 (2014-06-12) | 1-13 | |
| Y | * the whole document * | 8 | |
| X | EP 2 743 725 A1 (ELMOS SEMICONDUCTOR AG [DE]) 18 June 2014 (2014-06-18) | 1-13 | |
| Y | * the whole document * | 8 | |
| Y | US 2012/163126 A1 (CAMPBELL EWAN FRASER [GB] ET AL) 28 June 2012 (2012-06-28) * paragraphs [0002], [0087] - [0097], [0099], [0100]; figures 1,3,5,9-11 * | 8 | |

TECHNICAL FIELDS
SEARCHED (IPC)

G01S
G10K

The present search report has been drawn up for all claims

| Place of search | Date of completion of the search | Examiner |
|---|---|---|
| Munich | 5 July 2022 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 215 938 A1**

## ANNEX TO THE EUROPEAN SEARCH REPORT
## ON EUROPEAN PATENT APPLICATION NO.

EP 22 15 3209

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2022

| Patent document cited in search report | | | Publication date | Patent family member(s) | | | Publication date |
|---|---|---|---|---|---|---|---|
| DE 69416129 | | T2 | 01-07-1999 | CA | 2157652 | A1 | 11-04-1996 |
| | | | | DE | 69416129 | T2 | 01-07-1999 |
| | | | | EP | 0706835 | A1 | 17-04-1996 |
| | | | | JP | 2760963 | B2 | 04-06-1998 |
| | | | | JP | H08275294 | A | 18-10-1996 |
| | | | | US | 5757104 | A | 26-05-1998 |
| US 2014160892 | | A1 | 12-06-2014 | NONE | | | |
| EP 2743725 | | A1 | 18-06-2014 | NONE | | | |
| US 2012163126 | | A1 | 28-06-2012 | GB | 2486680 | A | 27-06-2012 |
| | | | | US | 2012163126 | A1 | 28-06-2012 |

EPO FORM P0459

For more details about this annex : see Official Journal of the European Patent Office, No. 12/82

**EP 4 215 938 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008060879 A